# EUROPEAN PATENT APPLICATION

(11) **EP 4 173 757 A1**
(43) Date of publication of application: **03.05.2023**
(21) Application number: 22196010.7
(22) Date of filing: 16.09.2022
(51) Int. Cl.: B25F 5/00, B23B 39/14

(54) **ELECTRIC TOOL SYSTEM, ELECTRIC TOOL, METHOD OF CONTROLLING ELECTRIC TOOL, AND PROGRAM**

(30) Priority: 17.09.2021 JP 2021152222
(71) Applicant: Panasonic Intellectual Property Management Co., Ltd., Osaka-shi, Osaka 540-6207 (JP)
(72) Inventor: OKITA, Atsushi, Osaka-shi, 540-6207 (JP)
(74) Representative: Müller-Boré & Partner Patentanwälte PartG mbB

(57) **Abstract**

Work efficiency when work is carried out, by using an electric tool, on a work position of a work site is improved. An electric tool system (1) includes a work position indicator (3), an electric tool (2), a tool position detector (36), and a tool position decider (384). The electric tool (2) is configured to carry out work on the work position (7) indicated by the visible light (8) from the work position indicator (3). The tool position detector (36) is configured to detect a relative position of the electric tool (2) with respect to the work position (7). The tool position decider (384) is configured to decide whether or not the electric tool (2) is set on the work position (7) with reference to a detection result by the tool position detector (36) before the electric tool (2) carries out the work on the work position (7).

## Description

### Technical Field

The present disclosure relates to electric tool systems, electric tools, methods of controlling the electric tools, and programs. The present disclosure specifically relates to an electric tool system configured to indicate, by a visible light from a work position indicator, a work position on which a worker is to carry out work by using an electric tool, the electric tool to be applied to the electric tool system, a method of controlling the electric tool, and a program.

### Background Art

Document 1(JP 2017-205824 A) discloses an electric tool including a driver, an operating unit, a sensor, and a controller. The driver drives the tool. The operating unit receives an operation for operating the driver. The sensor senses whether or not an electric tool body is in a held state where the electric tool body is held by a user. The controller performs control such that an operating state of the driver is an operating state set based on an input signal from the operating unit and a sensing result by the sensor.

For work by using the electric tool, an operator has to visually determine a work position at a work site. Therefore, the operator requires time and labor to determine a correct work position, which leads to low efficiency of the work.

In view of the foregoing, it is an object of the present disclosure to provide an electric tool system, an electric tool, a method of controlling the electric tool, and a program which are configured to improve work efficiency when work is carried out, by using the electric tool, on a work position of a work site.

### Summary of Invention

An electric tool system according to an aspect of the present disclosure includes a work position indicator, an electric tool, a tool position detector, and a tool position decider. The work position indicator is configured to indicate a work position by projecting visible light having a converging characteristic at a work site. The electric tool is configured to carry out work on the work position indicated by the visible light. The tool position detector is configured to detect a relative position of the electric tool with respect to the work position. The tool position decider is configured to decide whether or not the electric tool is set on the work position with reference to a detection result by the tool position detector before the electric tool carries out the work on the work position.

An electric tool according to an aspect of the present disclosure is an electric tool configured to carry out work on a work position indicated by visible light having a converging characteristic at a work site. The electric tool includes a tool position detector and a tool position decider. The tool position detector is configured to detect a relative position of the electric tool with respect to the work position. The tool position decider is configured to decide whether or not the electric tool is set on the work position with reference to a detection result by the tool position detector before the electric tool carries out the work on the work position.

A method of controlling an electric tool according to an aspect of the present disclosures includes a first step, a second step, a third step, and a fourth step. The first step includes indicate a work position by projecting visible light having a converging characteristic at a work site by using a work position indicator. The second step includes carrying out work, by using the electric tool, on the work position indicated by the visible light. The third step includes detecting a relative position of the electric tool with respect to the work position. The fourth step includes deciding whether or not the electric tool is set on the work position with reference to a detection result in the third step before the electric tool carries out the work on the work position.

A program according to an aspect of the present disclosure is configured to cause one or more processors to execute the method of controlling the electric tool.

### Brief Description of Drawings

FIG. 1 is a configuration diagram of an electric tool system according to an embodiment of the present disclosure;
FIG. 2 is a configuration diagram of a work position indicator included in the electric tool system;
FIG. 3 is a configuration diagram of an electric tool included in the electric tool system;
FIG. 4A is a flowchart illustrating operation of the electric tool system;
FIG. 4B is a flowchart illustrating the operation of the electric tool system;
FIG. 5A is a flowchart illustrating the operation of the electric tool system;
FIG. 5B is a flowchart illustrating the operation of the electric tool system;
FIG. 6 is a configuration diagram of an electric tool included in an electric tool system of each of a first variation and a third variation;
FIG. 7 is a configuration diagram of a work position indicator and an electric tool included in an electric tool system according to a second variation; and
FIG. 8 is a schematic configuration diagram of an electric tool system according to a fourth variation.

### Description of Embodiments

An electric tool system according to an embodiment of the present disclosure will be described below. The embodiment described below is a mere example of various embodiments of the present disclosure. Various modifications may be made to the embodiment described below depending on design and the like as long as the object of the present disclosure is achieved.

### (1) Embodiment

### (1-1) Overview of Electric Tool System

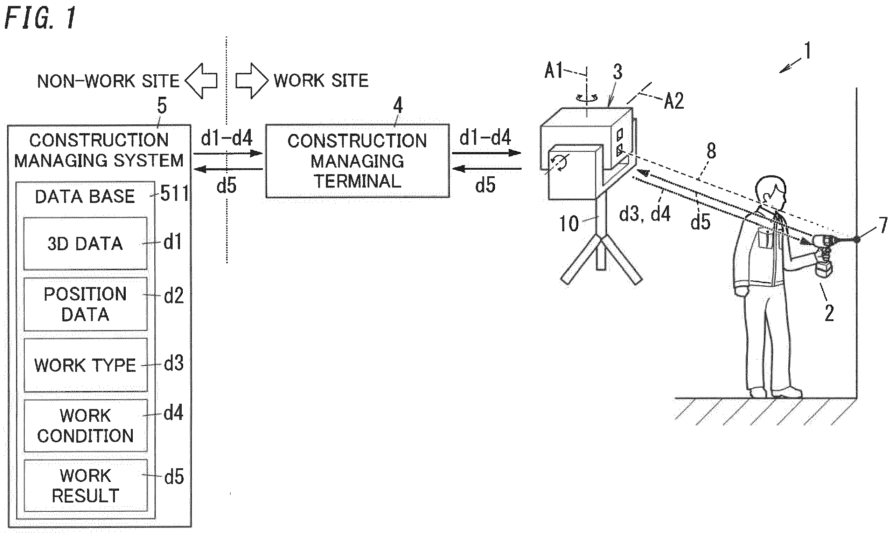

With reference to FIG. 1, an overview of an electric tool system 1 according to the embodiment will be described.

The electric tool system 1 is a system for causing an operator 6 at a work site such as a building site to carry out, by using an electric tool 2, predetermined work (e.g., screw tightening) on a determined work position 7 under a predetermined work condition d4 (e.g., a predetermined magnitude of a torque value). That is, work positions 7 are accurately determined at the work site, and the work condition d4 of the predetermined work differs according to the work positions 7. The work position 7 is a position on a floor surface or a wall surface of the work site.

More specifically, in the case of the electric tool system 1, a work position indicator 3 is disposed at the work site, and the work position indicator 3 projects visible light 8 having a converging characteristic to indicate the work position 7. Moreover, the work position indicator 3 transmits the work condition d4 to the electric tool 2, thereby automatically setting an operation setting of the electric tool 2 to an operation setting satisfying the work condition d4. Then, the operator 6 sets the electric tool 2 on the work position 7 indicated by the visible light 8 and actuates the electric tool 2, and thereby, the electric tool 2 automatically operates in the operation setting satisfying the work condition d4 to carry out the predetermined work. Thus, the operator 6 can carry out the predetermined work on the work position 7 indicated by the visible light 8 under the predetermined work condition d4 by simply setting the electric tool 2 on the work position 7 indicated by the visible light 8 and then actuating the electric tool 2.

"Setting the electric tool 2 on the work position 7" means bringing a tip tool of the electric tool 2 into contact with, or in the vicinity of, the work position 7 such that the predetermined work on the work position 7 is ready to be carry out by using the electric tool 2.

The electric tool 2 transmits work start information u1 and work end information u2 to the work position indicator 3 respectively at a work start timing and at a work end timing. In response to reception of the work end information u2, the work position indicator 3 indicates a next work position 7 with the visible light 8 and transmits the work condition d4 to the electric tool 2. The operator 6 carries out, by using the electric tool 2, the predetermined work on work positions 7 indicated in a sequential order by the visible light 8 under the work condition d4 set for the predetermined work.

### (1-2) Configuration of Electric Tool System

With reference to FIG. 1, the configuration of the electric tool system 1 will be described.

The electric tool system 1 includes the electric tool 2, The work position indicator 3, a construction managing terminal 4 (relay terminal), and a construction managing system 5 (external system). The construction managing system 5 in the present embodiment is one of components of the electric tool system 1. However, the construction managing system 5 does not have to be included in the components of the electric tool system 1.

The electric tool 2, the construction managing terminal 4, and the work position indicator 3 are disposed at the work site. On the other hand, the construction managing system 5 is mounted on an external device (e.g., a server for construction management) installed at a place (non-work site) different from the work site.

The electric tool 2 and the work position indicator 3 are configured to perform wireless communication (e.g., Near Field Communication over a wi-fi (registered trademark) network or the like) with each other. The work position indicator 3 and the construction managing terminal 4 are configured to perform wireless communication (e.g., Near Field Communication over a wi-fi (registered trademark) network or the lie) with each other. The construction managing system 5 and the construction managing terminal 4 are configured to perform wireless communication (e.g., long-range wireless communication over a cellular phone network or the like) with each other.

The construction managing system 5 is a system configured to manage the construction of a building and is mounted on the external device. The building also includes a built-in object incorporated into the building. The construction managing system 5 is provided with a data base 511 configured to store management information for managing the construction of the building. The management information managed by the construction managing system 5 constitutes Building Information Modeling (BIM). The BIM is information for reproducing, on a computer, a three-dimensional model (BIM model) of the same building as a real building and can include various types of information such as the price of each built-in object in addition to shape data of the built-in object (wall, pillar, staircase, etc.) incorporated into the building.

In the present embodiment, the management information includes, for example, 3D data d1, position data d2, work type d3, the work condition d4, and a work result d5.

The 3D data d1 is three-dimensional data relating to the construction of the building. The 3D data d1 includes three-dimensional data relating to a working place when the building is constructed. The position data d2 is the work position 7 at the work site and is data relating to the work position 7 at which various types of work are carried out by using the electric tool 2. The work type d3 is information on work contents of the various types of work, for example, screw tightening. The work condition d4 is information on the work condition d4 (e.g., tightening torque value) of the predetermined work (e.g., screw tightening) carried out on the work position 7. The work result d5 includes: information on the work position 7; information on an operation waveform during the work of the electric tool 2 used for the work carried out on the work position 7; work start information on a work start of the work; and work end information on a work end of the work.

The construction managing system 5 transmits various types of information (the 3D data d1, the position data d2, the work type d3, and the work condition d4) other than the work result d5 of the management information via the construction managing terminal 4 to work position indicator 3. The work position indicator 3 then projects, based on the various types of information d1 to d4 thus received, the visible light 8 to indicate the work position 7 and transmits, to the electric tool 2, the work condition d4 of the work to be carried out on the work position 7 thus indicated. In response, the electric tool 2 transmits the work result d5 relating to the work carried out by using the electric tool 2 to the work position indicator 3. The work result d5 includes the operation waveform of the electric tool 2, the work start information, and the work end information as described above. Then, the work position indicator 3 transmits the work result d5 thus received to the construction managing system 5 via the construction managing terminal 4. The construction managing system 5 acquires and manages the operation result d5 in this manner.

Based on the work result d5 thus being managed, the construction managing system 5 classifies the work on all work positions relating to the building into an unworked place(s) and a work completed place(s). The "unworked place" is a place (work position) on which the work has not been carried out, and the "work completed place" is a workplace (work position) on which the work has been completed. In this way, the construction managing system 5 manages progress in construction of the building.

The construction managing terminal 4 is a portable communication terminal and is carried by, for example, the worker 6. The construction managing terminal 4 receives the various types of data (the 3D data d1, the position data d2, the work type, and the work condition d4) transmitted from the construction managing system 5 as needed or collectively, and the construction managing terminal 4 then transmits various types of information (the 3D data d1, the position data d2, the work type d3, and the work condition d4) of the same content as the received various types of information to the work position indicator 3. The construction managing terminal 4 receives the work result d5 from the work position indicator 3 and then transmits the work result d5 thus received to the construction managing system 5 as needed or collectively.

The work position indicator 3 is disposed at the work site. the work position indicator 3 projects, based on the various types of information (the 3D data d1, the position data d2, the work type d3, and the work condition d4) received from the construction managing terminal 4, the visible light 8 at the work site to indicate the work position 7. Further, the work position indicator 3 transmits the work type d3 and the work condition d4 of the work to be carried out on the work position 7 indicated by the visible light 8 to the electric tool 2. The visible light 8 is an electromagnetic wave (e.g., visible-light laser) being in the visible range and having a converging characteristic.

The work position indicator 3 specifies an arrangement position of the work position indicator 3 at the work site with reference to a reference mark (e.g., a reference point or a reference line segment) drawn on the work site before the work position 7 is indicated by the visible-light 8 at the work site. This arrangement position may be simply referred to as a "device position". Note that the 3D data d1 includes the position data of the reference mark. The work position indicator 3 specifies the work position 7 at the work site corresponding to the work position 7 on the 3D data d1 with reference to the device position thus specified and indicates the work position 7 by the visible-light 8 at the work site thus specified. In the following explanation, the term "the device position" simply used means the arrangement position of the work position indicator 3 at the work site.

The electric tool 2 is used for the work to be carried out on the work position 7 indicated by the visible light 8. The electric tool 2 is, for example, a portable electric tool. The electric tool 2 receives the work condition d4 from the work position indicator 3 and sets the operation setting of the electric tool 2 to an operation setting satisfying the work condition d4 thus received. As a result, when the operator 6 actuates the electric tool 2, the electric tool 2 automatically operates in the operation setting satisfying the work condition d4. Thus, the operator 6 simply sets the electric tool 2 on the work position 7 indicated by the visible light 8 and actuates the electric tool 2, thereby carrying out the work on the work position 7 such that the work condition d4 is satisfied.

The electric tool 2 transmits the work result d5 relating to the work on the work position 7 indicated by the visible light 8 to the work position indicator 3. More specifically, the electric tool 2 transmits the work start information to the work position indicator 3 at the work start timing of the work and transmits the work end information to the work position indicator 3 at the work end timing of the work as the work result d5. Note that the electric tool 2 determines the start and the end of the work from the operation waveform of the electric tool 2. In addition, the electric tool 2 transmits, to the work position indicator 3, the operation waveform of the electric tool 2 while the work is carried out as the operation result d5.

### (1-3) Configuration of Work Position Indicator 3

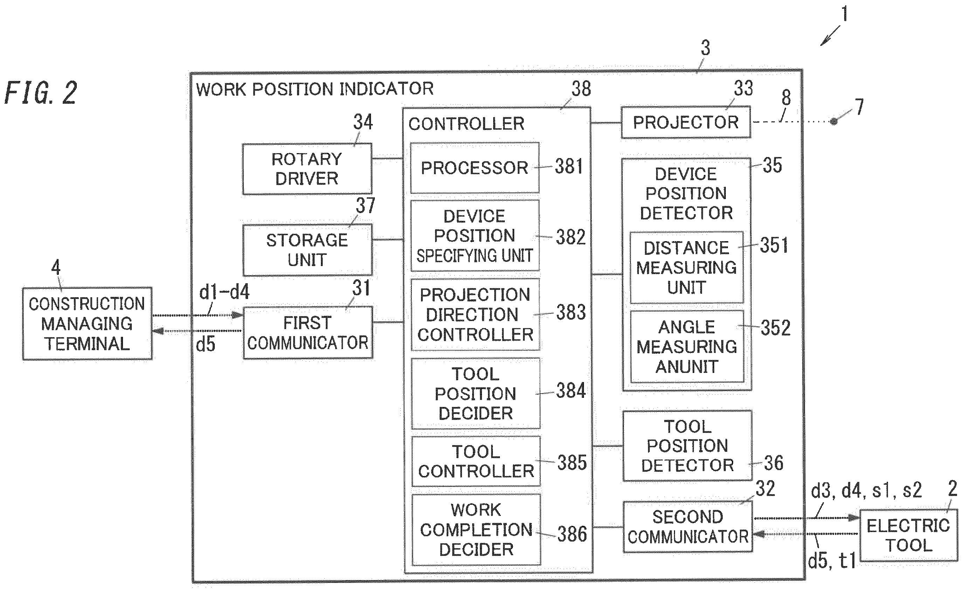

With reference to FIGS. 1 and 2, the configuration of the work position indicator 3 will be described.

As shown in FIG. 1, the work position indicator 3 is disposed on a platform 10 (e.g., a tripod) on a floor surface of the work site. More specifically, the platform 10 is disposed at a predetermined location on the floor surface of the work site, and the work position indicator 3 is fixed to an upper part of the platform 10. The work position indicator 3 is fixed such that the direction of the work position indicator 3 can be changed with respect to the platform 10. In the present embodiment, the work position indicator 3 is fixed rotatably around two axes of rotation (e.g., a vertical axis A1 and a horizontal axis A2) intersecting (e.g., orthogonal to) each other with respect to the platform 10.

The work position indicator 3 includes a first communicator 31, a second communicator 32, a projector 33, a rotary driver 34, a device position detector 35, a tool position detector 36, a storage unit 37, and a controller 38 (see FIG. 2).

The first communicator 31 performs wireless communication with the construction managing terminal 4. The second communicator 32 performs wireless communication with the electric tool 2. The first communicator 31 and the second communicator 32 may have different communication schemes or may have the same communication schemes. In the present embodiment, the first communicator 31 and the second communicator 32 are components separated from each other, but when the communication scheme of the first communicator 31 and the communication scheme of the second communicator 32 are the same, the first communicator 31 and the second communicator 32 may be configured as one communicator.

The projector 33 projects the visible light 8 onto the work position 7 of the work site to cause the operator 6 to visually recognize the work position 7, thereby indicating the work position 7. The projector 33 includes a light source and an optical system.

The rotating driver 34 is a driver for changing the direction of the work position indicator 3 and includes, for example, a motor, a drive mechanism, and a drive circuit. The rotating driver 34 rotatably drives the work position indicator 3 around two axes of rotation A1 and A2.

The device position detector 35 detects the arrangement position of the work position indicator 3 at the work site with reference to the position of the reference mark (e.g., a reference point or a reference line segment) drawn on the work site. That is, the device position detector 35 detects a relative position of the work position indicator 3 with respect to the reference mark at the work site. The arrangement position of the work position indicator 3 at the work site may hereinafter be simply described as a "device position". The reference mark drawn on the work site is also defined on the 3D data. Therefore, as described above, detecting the device position with reference to the location of the reference mark drawn on the work site can specify the arrangement position of the work position indicator 3 on the 3D data. When a plurality of reference marks are drawn on the work site, the device position detector 35 detects the device position with reference to a predetermined reference mark of the plurality of reference marks. In the following description, the term "reference mark" simply used means a reference mark drawn on the work site.

More specifically, the device position detector 35 measures: a relative distance between the work position indicator 3 and the reference mark; and a direction angle defining a direction toward the reference mark from the work position indicator 3, and based on these measurement results, the device position detector 35 detects the device position. For this purpose, the device position detector 35 includes a distance measuring unit 351 and an angle measuring unit 352.

The distance measuring unit 351 measures the relative distance between the reference mark and the work position indicator 3. The distance measuring unit 351 includes a light emitter, a light receiver, and a distance measuring processor. The light emitter projects a visible-light laser beam toward a measurement target (the reference mark). The light receiver receives reflected light of the visible-light laser beam reflected off the measurement object. The distance measuring processor measures the relative distance with reference to the light-receiving intensity of the light receiver. The visible-light laser beam is an example of the visible light having a converging characteristic. The distance measuring unit 351 projects the visible-light laser beam onto the reference mark, thereby making the measurement object of the distance measuring unit 351 visually recognizable, so that the relative distance can be accurately measured. The light emitter of the distance measuring unit 351 may also be used as a light source of the projector 33. That is, the relative distance may be measured by using the visible light 8 indicating the work position 7.

The angle measuring unit 352 measures an azimuth angle defining a direction toward the reference mark (i.e., the measurement target of the distance measuring unit 351) from the work position indicator 3. More specifically, the angle measuring unit 352 measures a drive amount of the rotational driver 34 when the distance measuring unit 351 is manually directed to the reference mark by the operator 6, thereby measuring the direction angle. Note that the "drive amount of the rotary driver 34" is a rotation amount of the rotary driver 34 around each of the two axes of rotation A1 and A2. In the present embodiment, the distance measuring unit 351 projects the visible-light laser beam onto the measurement object, and therefore, the visible-light laser beam makes the measurement object of the angle measuring unit 352 visually recognizable, so that the direction angle can be accurately measured.

In the present embodiment, to measure the relative distance and the direction angle by the device position detector 35, the operator 6 manually causes rotation of the work position indicator 3 around the two axes of rotation A1 and A2 in advance such that the visible-light laser beam from the distance measuring unit 351 is projected onto the reference mark. The distance measuring unit 351 measures the relative distance with respect to the rotation. Further, the angle measuring unit 352 measures the direction angle by measuring the drive amount of the rotational driver 34 by the rotation.

In the present embodiment, the reference mark includes, for example, two reference line segments. The two reference line segments do not intersect each other, but the extension lines of the two reference line segments are orthogonal to each other. In this case, the device position detector 35 measures the position of the intersection (position at the work site) of the extension lines of the two reference line segments, and based on the position of the intersection, the device position detector 35 detects the device position. Specifically, the device position detector 35 measures positions (positions at the work site) of three measurement points arranged on the two reference line segments by the distance measuring unit 351. The three measurement points are measurement points accordingly selected by the operator 6. Two of the three measurement points are arranged on one of the two reference line segments, and the remaining one pint is arranged on the other of the two reference line segments. Then, the device position detector 35 performs computing using geometric knowledge from the three measurement points thus measured, thereby obtaining the position of the intersection (position at the work site), and from the position of the intersection, the device position detector 35 detects the device position.

The tool position detector 36 detects the relative position of the electric tool 2 with respect to the work position 7 (the work position indicated by the visible light 8) at the work site. In the present embodiment, the electric tool 2 receives reflected light of the visible light 8 projected from the projector 33 and reflected off the work position 7. The electric tool 2 transmits a reception intensity signal t1 to the second communicator 32 of the work position indicator 3. The reception intensity signal t1 represents the reception intensity at the time of reception of the reflected light. The tool position detector 36 detects, based on the reception intensity signal t1 received by the second communicator 32, the relative position of the electric tool 2 with respect to the work position 7. That is, the signal intensity of the reflected light of the visible light 8 reflected off the work position 7 decreases as the distance from the work position 7 increases. Based on this characteristic, the tool position detector 36 detects the relative position. That is, the reflected light of the visible light 8 reflected off the work position 7 reaches only within a certain range of the work position 7 (e.g., near the work position 7), and therefore, while the electric tool 2 receives the reflected light having a certain extent of signal intensity (a predetermined value or larger), the electric tool 2 is disposed within the certain range of the work position 7 (e.g., near the work position 7) (i.e., the relative position of the electric tool 2 with respect to the work position 7 is almost the same position as the work position 7, and in other words, the electric tool 2 is set on the work position 7). Therefore, while the reception intensity signal t1 received by the tool position detector 36 shows reception intensity greater than or equal to a predetermined value, the electric tool 2 is correctly set on the work position 7.

The storage unit 37 is an electrically rewritable nonvolatile storage unit such as semiconductor memory. The storage unit 37 stores various types of information (e.g., the 3D data d1, the position data d2, the work type d3, the work condition d4) received from the construction managing terminal 4. The storage unit 37 further stores various types of information (e.g., the operation result d5) received from the electric tool 2. Moreover, the storage unit 37 stores a control program and the like required for various types of operations of the work position indicator 3.

The controller 38 controls processors (the first communicator 31, the second communicator 32, the projector 33, the rotational driver 34, the device position detector 35, the tool position detector 36, and the storage unit 37) other than the controller 38 of the work position indicator 3.

The controller 38 includes a processor 381, a device position specifying unit 382, a projection direction controller 383, a tool position decider 384, a tool controller 385, and a work completion decider 386.

The processor 381 stores, in the storage unit 37, various types of information (e.g., the 3D data d1, the position data d2, the work type d3, the work condition d4) received by the first communicator 31 from the construction managing terminal 4. The processor 381 further stores various types of information (e.g., the operation result d5) received by the second communicator 32 from the electric tool 2. Moreover, the processor 381 transmits, from the first communicator 31 to the construction managing terminal 4, the various types of information (e.g., the operation result d5) received by the second communicator 32 from the electric tool 2.

The device position specifying unit 382 specifies the arrangement position of the work position indicator 3 on the 3D data d1 with reference to the detection result (i.e., the relative position (the device position) of the work position indicator 3 with respect to the reference mark at the work site) by the device position detector 35. More specifically, the reference mark drawn on the work site is also defined on the 3D data d1. Therefore, identifying the reference mark included in the detection result by the device position detector 35 and the reference mark included in the 3D data d1 specifies, from the detection result by the device position detector 35, the arrangement position of the work position indicator 3 on the 3D data d1.

The projection direction controller 383 controls the direction of the projector 33 and light projection by the projector 33.

More specifically, the projection direction controller 383 controls the rotational driver 34 such that the projector 33 of the work position indicator 3 is directed to the work position 7 of the work site with reference to: various types of information (the 3D data d1 and the position data d2) received from the construction managing terminal 4; and a specified result by the device position specifying unit 382. Thus, the visible light 8 from the projector 33 is projected onto the work position 7, and thereby, the visible light 8 indicates the work position 7.

More specifically, the projection direction controller 383 obtains the relative position of the work position 7 with respect to the arrangement position of the work position indicator 3 with reference to: various types of information (i.e., the 3D data d1 and the position data d2) received from the construction managing terminal 4; and the specified result (i.e., the arrangement position of the work position indicator 3 on the 3D data d1) by the device position specifying unit 382. Based on the relative position thus obtained, the projection direction controller 383 then obtains an azimuth angle in a direction toward the work position 7 from the work position indicator 3. Then, the projection direction controller 383 controls the rotational driver 34 in accordance with the direction angle thus obtained, thereby directing the projector 33 of the work position indicator 3 toward the work position 7 of the work site. Then, the projection direction controller 383 causes the projector 33 to project the visible light 8, thereby indicating the work position 7 by the projecting the visible light 8.

Before an operator carries out, by using the electric tool 2, the work on the work position 7 indicated by the visible light 8, the tool position decider 384 determines whether or not the electric tool 2 is set on the work position 7 indicated by the visible light 8 with reference to a detection result by the tool position detector 36. More specifically, the tool position decider 384 determines whether or not the electric tool 2 is set on the work position 7 with reference to the detection result by the tool position detector 36 and depending on whether or not the electric tool 2 is disposed in the certain range around the work position 7 (e.g., near the work position 7). That is, if the electric tool 2 is disposed within the certain range, the tool position decider 384 determines that the electric tool 2 is set on the work position 7. If the electric tool 2 is not disposed within the certain range, the tool position decider 384 determines that the electric tool 2 is not set on the work position 7. That is, the tool position decider 384 determines that the electric tool 2 is set on the work position 7 only while the tool position detector 36 outputs the detection result that the electric tool 2 is disposed within the certain range. This accurately manages whether or not the electric tool 2 is correctly set on the work position 7 when the electric tool 2 carries out predetermined work on the work position 7.

The tool controller 385 transmits a control signal via the second communicator 32 to the electric tool 2 in accordance with a determination result by the tool position decider 384, thereby controlling the electric tool 2. More specifically, if the tool position decider 384 determines that the electric tool 2 is set on the work position 7, the tool controller 385 transmits an operation permission signal s1 (control signal) from the second communicator 32 to the electric tool 2. This allows the operator 6 to give an operation to (e.g., actuate) the electric tool 2. This allows the operator 6 to carry out, by using the electric tool 2, the work on the work position 7 indicated by the visible light 8.

In contrast, if the tool position decider 384 determines that the electric tool 2 is not set on the work position 7, the tool controller 385 transmits an operation rejection signal s2 (control signal) from the second communicator 32 to the electric tool 2, thereby stopping the electric tool 2. This inhibits the operator 6 to carry out, by using the electric tool 2, the work on the work position 7 indicated by the visible light 8. Further, if the tool position decider 384 determines that the electric tool 2 is not set on the work position 7, the tool controller 385 notifies a person around the electric tool 2 of the determination result (that the electric tool 2 is not set on the work position 7) by the tool position decider 384 by using a notifying unit 26 (e.g., sound output unit), which is described later, of the electric tool 2. This informs the operator 6 that the electric tool 2 is not set on the work position 7, thereby prompting the operator 6 to set the electric tool 2 on the work position 7.

Based on the work condition d4 received from the construction managing terminal 4, the tool controller 385 specifies the work condition d4 of the work to be carried out on the work position 7 indicated by the visible light 8, and the tool controller 385 transmits the work condition d4 thus specified from the second communicator 32 to the electric tool 2. This automatically sets the operation setting of the electric tool 2 to an operation setting satisfying the work condition d4. When the operator 6 actuates the electric tool 2 in this state, the electric tool 2 automatically operates in the operation setting satisfying the work condition d4.

When a plurality of work positions 7 are to be worked by the operator 6, the work completion decider 386 determines whether or not the work by using the electric tool 2 is completed for all of the work positions 7. More specifically, the work completion decider 386 receives the work end information u2 on the work and operation waveform information on the electric tool 2 during the work from the electric tool 2 via the second communicator 32 each time the electric tool 2 finishes the work on the work position 7. Upon receiving the work end information u2 from the electric tool 2, the work completion decider 386 causes the projection direction controller 383, the tool position decider 384, and the tool controller 385 to perform the same processing as that described above on a next work position 7. Then, the work completion decider 386 makes the operator 6 to carry out the work on the next work position 7 by using the electric tool 2.

When the work completion decider 386 receives the work end information u2 from the electric tool 2 the same number of times as the number of the plurality of work positions 7, the work completion decider 386 determines that the work by using the electric tool 2 has been carried out on all of the plurality of work positions 7. Then, the work completion decider 386 transmits, as the work result d5, its determination result (that the predetermined work by using the electric tool 2 has been carried out on all of the plurality of work positions 7) and pieces of operation waveform information on the electric tool 2 at the respective work positions via the first communicator 31 to the construction managing terminal 4. The operation waveform information is information indicating the operation waveform of the electric tool 2 during the work.

In the present embodiment, each of the components (the first communicator 31, the second communicator 32, the device position detector 35, the tool position detector 36, and the controller 38) of the work position indicator 3 is constituted by, for example, a computer, as a main component, including a Central processing Unit (CPU) and memory, and the CPU executes a program stored in the memory, thereby implementing the function of each of the respective components. The program may be stored in the memory of the computer in advance, may be provided as a recording medium such as a memory card storing the program, or may be provided over a telecommunications network such as the Internet.

### (1-4) Configuration of Electric Tool 2

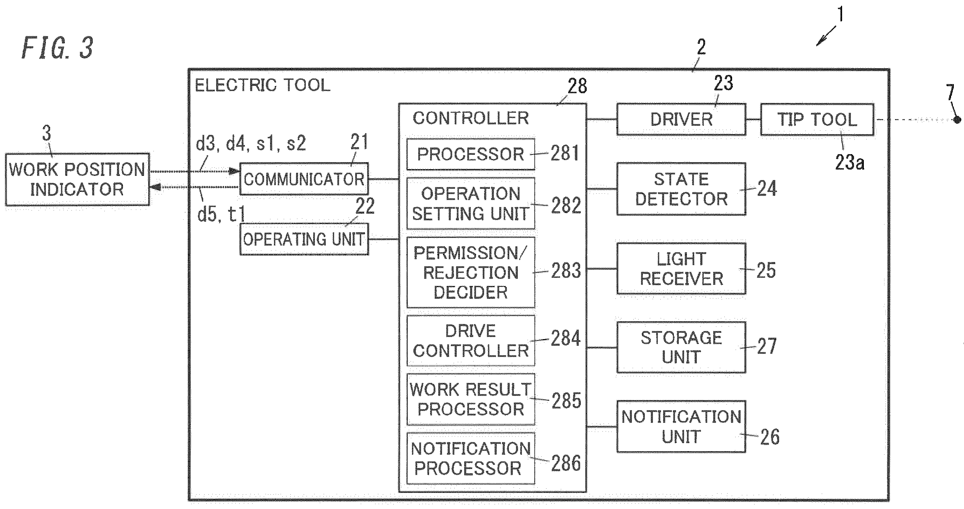

With reference to FIG. 3, the configuration of the electric tool 2 will be described.

The electric tool 2 includes a communicator 21, an operating unit 22, a driver 23, a tip tool 23a, a state detector 24, a light receiver 25, a storage unit 27, a notification unit 26, and a controller 28.

The communicator 21 performs wireless communication (e.g., over a Wi-Fi (registered trademark) network) with the second communicator 32 of the work position indicator 3.

The operating unit 22 is a part for receiving an operation given to the electric tool 2 by the operator 6 and, for example, switches on/off the electric tool 2. The operating unit 22 is, for example, a trigger-type operating unit 22, and the electric tool 2 is actuated by the pull-in operation given to the trigger, and the electric tool 2 is stopped by the operation of returning the trigger to its initial position.

The driver 23 is a part to which the tip tool 23a is to be detachably fixed and which is configured to drive the tip tool 23a. The driver 23 includes a bit for detachably fixing the tip tool 23a, a motor and a drive mechanism for driving the tip tool 23a. The tip tool 23a is, for example, a drill, a screwdriver, or an impact driver.

The state detector 24 is a sensor for detecting an operating state of the electric tool 2. The operating state of the electric tool 2 is, for example, a state regarding starting and stopping of the electric tool 2 and the output (e.g., the amount of torque applied to the tip tool 23a) of the electric tool 2. The state detector 24 detects the operation amount of the operating unit 22 and the operation waveform of the motor in the driver 23, thereby detecting the operating state of the electric tool 2. The operation waveform of the motor is, for example, the waveform of a voltage applied to the motor, or the waveform of the output voltage of the motor. The operation waveform of the motor is the operation waveform of the electric tool 2.

The light receiver 25 is a sensor configured to receive reflected light of the visible light 8 projected from the work position indicator 3 to the work position 7 and reflected off the work position 7. The light receiver 25 includes a light receiving element and the like.

The notifying unit 26 is a device for notifying a person (e.g., the operator 6) present in the vicinity of the electric tool 2 of various types of information and is, for example, a sound output device or a display device. The sound output device is a device for outputting sound or voice. The display device is a display device configured to display images and is, for example, a liquid crystal display device. If the electric tool 2 is not set on the work position 7 indicated by the visible-light 8, the notifying unit 26 gives notification of the electric tool 2 not being set on the work position 7. The notifying unit 26 give notification of the work type of the work to be carried out on the work position 7 indicated by the visible light 8.

The storage unit 27 is an electrically rewritable nonvolatile storage unit 27 such as semiconductor memory. The storage unit 27 stores various types of information (e.g., the work type d3 and the work condition d4) received from the work position indicator 3. The storage unit 27 further stores information (work state information) on a work state of the electric tool 2 detected by the state detector 24. In addition, the storage unit 27 stores a control program or the like required for various types of operations of the electric tool 2.

The controller 28 controls components (the communicator 21, the driver 23, the state detector 24, the light receiver 25, the storage unit 27 and the notification unit 26) other than the controller 28 of the electric tool 2. The controller 28 includes the processor 281, an operation setting unit 282, a permission/rejection decider 283, a drive controller 284, a work result processor 285, and a notification processor 286.

The processor 281 stores, in the storage unit 27), various types of information (e.g., the work type d3 and the work condition d4) received by the communicator 21 from the work position indicator 3. The processor 281 stores the detection result by the state detector 24.

Further, the processor 281 transmits a light reception result by the light receiver 25 from the communicator 21 as the reception intensity signal t1 to the work position indicator 3. The light reception result (reception intensity) by the light receiver 25 is reception intensity greater than or equal to a predetermined value only when the electric tool 2 is set on the work position 7. Therefore, the processor 281 transmits the reception intensity signal t1 having the reception intensity greater than or equal to the predetermined value from the communicator 21 to the work position indicator 3 only when the electric tool 2 is set on the work position 7. On the other hand, when the electric tool 2 is not set on the work position 7, the processor 281 transmits the reception intensity signal t1 having a reception intensity less than the predetermined value from the communicator 21 to the work position indicator 3. Thus, the tool position detector 36 of the work position indicator 3 receives the reception intensity signal t1 having the reception intensity greater than or equal to the predetermined value from the electric tool 2, thereby securing that the electric tool 2 is set on the work position 7 during the reception of the reception intensity signal t1. This accurately manages whether or not the electric tool 2 is correctly set on the work position 7 when the electric tool 2 carries out predetermined work on the work position 7.

The operation setting unit 282 sets, based on the work condition d4 received by the communicator 21 from the work position indicator 3, the operation setting of the electric tool 2 to an operation setting satisfying the work condition d4 thus received. For example, when the work condition is that the "torque value = A value", the operation setting unit 282 sets the operation setting of the electric tool 2 such that the torque value = A value.

The permission/rejection decider 283 decides whether the operation of the electric tool 2 is permitted or rejected with reference to the operation permission signal s1 and the operation rejection signal s2 received by the communicator 21 from the work position indicator 3. That is, if the communicator 21 receives the operation permission signal s1, the permission/rejection decider 283 permits the operation of the electric tool 2, whereas if the communicator 21 receives the operation rejection signal s2, the permission/rejection decider 283 rejects the operation of the electric tool 2.

The drive controller 284 performs drive control of the driver 23 with reference to an input operation given to the operating unit 22, a setting result by the operation setting unit 282, and a decision result by the operation permission/rejection decider 283.

More specifically, at the time of controlling the driver 23 in response to the input operation given to the operating unit 22, the drive controller 284 controls the driver 23 with reference to the decision result by the operation permission/rejection decider 283. That is, the operation permission/rejection decider 283 may decide to permit the operation of the electric tool 2 at the time of controlling the driver 23 in response to the input operation given to the operating unit 22, and in this case, the drive controller 284 controls the driver 23 in response to the input operation to the operating unit 22. In contrast, the operation permission/rejection decider 283 may decide to reject the operation of the electric tool 2 at the time of controlling the driver 23 in response to the input operation given to the operating unit 22, and in this case, the drive controller 284 stops the driver 23 independently of the input operation to the operating unit 22.

Further, at the time of controlling the driver 23 in response to the input operation given to the operating unit 22, the drive controller 284 controls the driver 23 independently of the operation amount of the operating unit 22 but with reference to the operation setting (i.e., the operation setting satisfying the work condition d4 thus received) set by the operation setting unit 282. For the drive controller 284, suppose, for example, that the setting operation set by the operation setting unit 282 is the content that the torque value of the tip tool 23a is set to a certain value (A value). In this case, the drive controller 284 controls the driver 23 such that the output of the tip tool 23a is the A value independently of the operation amount of the operating unit 22. Thus, at the time of the electric tool 2 being operated by the operator 6 via the operating unit 22, the operator 6 can operate the electric tool 2 in accordance with the operation setting set by the operation setting unit 282 only when the operation permission/rejection decider 283 decides to permit the operation of the electric tool 2.

The work result processor 285 transmits the detection result by the state detector 24 as the work result d5 from the communicator 21 to the work position indicator 3. More specifically, when the state detector 24 detects the work start of the electric tool 2, the work result processor 285 transmits the detection result (work start information) as the work result d5 from the communicator 21 to the work position indicator 3. Moreover, when the state detector 24 detects the work end of the electric tool 2, the work result processor 285 transmits the detection result (work end information) as the work result d5 from the communicator 21 to the work position indicator 3. Further, when the state detector 24 detects the work end of the electric tool 2, the work result processor 285 transmits the operation waveform of the electric tool 2 during the work (i.e., the operation waveform of the motor) as the work result d5 from the communicator 21 to the work position indicator 3.

When the communicator 21 receives the operation rejection signal s2 from the work position indicator 3, the notification processor 286 notifies people (including the operator 6) around the electric tool 2 of the information (i.e., that the electric tool 2 is not set on the work position 7 indicated by the visible light 8) from the notifying unit 26. Thus, the operator 6 sets the electric tool 2 on the work position 7 indicated by the visible light 8. When the tool position detector 36 of the work position indicator 3 detects that the electric tool 2 is set on the work position 7, the electric tool 2 is operable by receiving the operation permission signal s1 from the work position indicator 3.

Further, when the notification processor 286 receives the work type d3 from the work position indicator 3, the notifying unit 26 notifies people (including the operator 6) around the electric tool 2 of the type (work content) of the work to be carried out on the work position 7 indicated by the visible light 8 by the work position indicator 3. Thus, the operator 6 replaces the tip tool 23a mounted on the electric tool 2 to a tip tool 23a corresponding to the operation type d3.

In the present embodiment, each of the components (the communicator 21, the state detector 24, the notifying unit 26, and the controller 28) of the electric tool 2 is constituted by, for example, a computer, as a main component, including a Central processing Unit (CPU) and memory, and the CPU executes a program stored in the memory, thereby implementing the function of each of the respective components. The program may be stored in the memory of the computer in advance, may be provided as a recording medium such as a memory card storing the program, or may be provided over a telecommunications network such as the Internet.

### (1-5) Operation Description

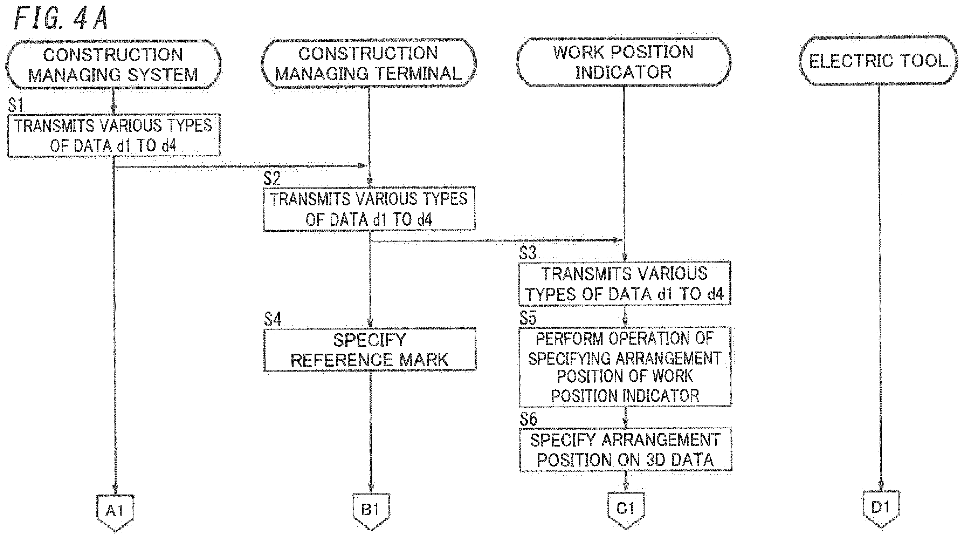

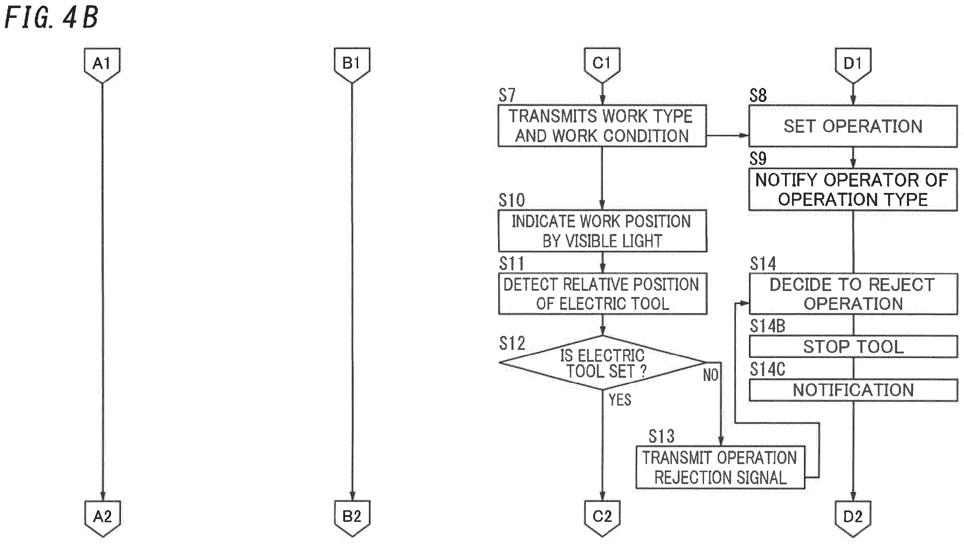

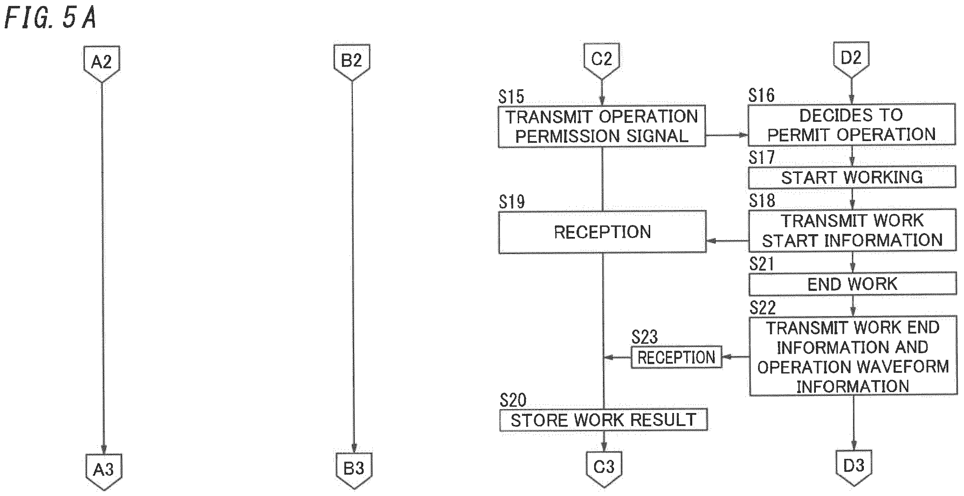

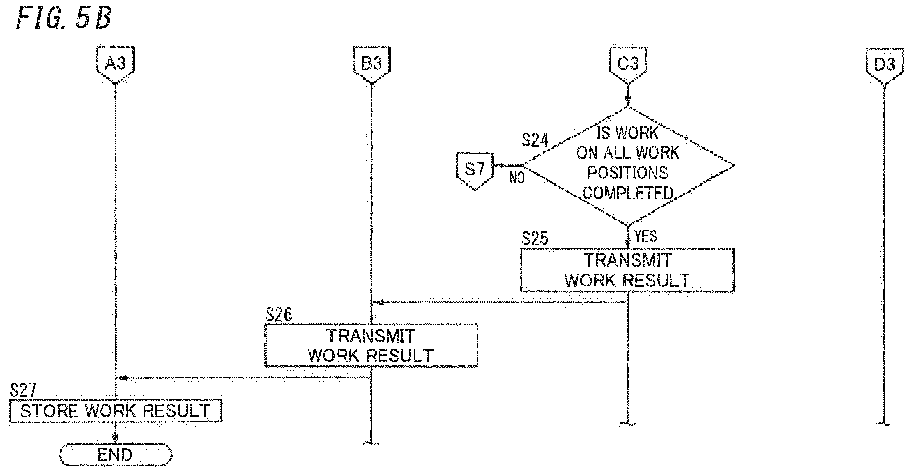

With reference to FIGS. 4A, 4B, 5A, and 5B, the operation of the electric tool system 1 will be described.

Here, the construction managing terminal 4 is carried by the worker 6, and the work position indicator 3 is disposed at the work site.

The construction managing system 5 transmits various types of data d1 to d4 to the construction managing terminal 4 (step S1). When receiving the various types of data d1 to d4 from the construction managing system 5, the construction managing terminal 4 transmits the received various types of data d1 to d4 to the work position indicator 3 (step S2). When receiving the various types of data d1 to d4 from the construction managing terminal 4, the work position indicator 3 stores the received various types of data d1 to d4 (step S3).

The construction managing terminal 4 informs the operator 6 of the reference mark to be used by the operator 6 in the process in step S5 described later (step S4). For example, a 3D image of the work site including the reference mark is displayed on a display unit of the construction managing terminal 4, thereby informing the operator 6 of the reference mark.

The worker 6 specifies, at the work site, a reference mark corresponding to the reference mark informed from the construction managing terminal 4 in step S3. Then, the operator 6 manually moves the work position indicator 3 to perform the operation of specifying the arrangement position of the work position indicator 3 (i.e., the relative position of the work position indicator 3 with respect to the reference mark) with reference to the reference mark thus specified (step S5). Through this operation, the work position indicator 3 specifies the arrangement position of the work position indicator 3 on the 3D data d1 (step S6).

In steps S5 and S6, more specifically, the operator 6 manually changes the direction of the work position indicator 3 such that the distance measuring unit 351 of the work position indicator 3 is in the direction toward the reference mark. In this changed state, the device position detector 35 of the work position indicator 3 measures: the relative distance between the work position indicator 3 and the reference mark; and a direction angle defining a direction toward the reference mark from the work position indicator 3. Then, the device position specifying unit 382 of the work position indicator 3 obtains a relative arrangement between the work position indicator 3 and the reference mark with reference to the result of the above-described measurement, and based on the relative arrangement thus obtained, the device position specifying unit 382 specifies the arrangement position of the work position indicator 3 on the 3D data d1.

The work position indicator 3 then transmits the work type d3 and the work condition d4 of the work to be carried out on the work position 7 indicated in step S10 to the electric tool 2 (step S7). Step S10 will be described later. The electric tool 2 receives the work condition d4 from the work position indicator 3 and then changes the operation setting of the electric tool 2 to an operation setting satisfying the work condition d4 thus received (step S8). Further, the electric tool 2 receives the operation type d3 from the work position indicator 3 and then notifies the operator 6 of the operation type d3 of the electric tool 2 from the notification unit 26 (step S9). Thus, the operator 6 replaces the tip tool 23a of the electric tool 2 to a tip tool 23a corresponding to the operation type d3 thus notified.

Then, the projection direction controller 383 of the work position indicator 3 controls the rotational driver 34 such that the projector 33 is directed toward the work position 7 of the work site with reference to the 3D data d1 and the position data d2 received in step S3 and a specified result in step S6. Then, the projection direction controller 383 of the work position indicator 3 causes the projector 33 to emit the visible light 8 to indicate the work position 7 of the work site by the visible light 8 (step S10). The operator 6 carries out, by using the electric tool 2, the work on the work position 7 indicated in this way by the visible light 8.

The tool position detector 36 of the work position indicator 3 detects the relative position of the electric tool 2 with respect to the work position 7 (step S11). The tool position decider 384 of the work position indicator 3 decides, based on the detection result by the tool position detector 36, whether or not the electric tool 2 is set on the work position 7 indicated by the visible light 8 (step S12). As a result of this decision, if the electric tool 2 is not set on the work position (step S12: No), the tool position decider 384 of the work position indicator 3 transmits the operation rejection signal s2 to the electric tool 2 (step S13). Then, the electric tool 2 receives the operation rejection signal s2, and the permission/rejection decider 283 of the electric tool 2 then decides to reject the operation of the electric tool 2 (step S14).

In response to a decision result in step S14, the drive controller 284 of the electric tool 2 stops the electric tool 2 (step S14B). This makes the electric tool 2 inoperable in response to an operation given to the electric tool 2 by the operator 6. Further, in accordance with the decision result in step S14, the notifying unit 26 of the electric tool 2 gives notification of the electric tool 2 not being set on the work position 7 (step S14C). Thus, the operator 6 sets the electric tool 2 on the work position 7.

In contrast, if the decision result in step S12 is that the electric tool 2 is set on the work position (step S12: Yes), the tool position decider 384 of the work position indicator 3 transmits the operation permission signal s1 to the electric tool 2 (step S15). Then, the electric tool 2 receives the operation permission signal s1, the permission/rejection decider 283 of the electric tool 2 then decides to permit the operation of the electric tool 2 (step S16). In response to this decision, the drive controller 284 of the electric tool 2 allows the electric tool 2 to operate. Specifically, the drive controller 284 brings the electric tool 2 into an enabled state.

Then, the operator 6 starts, by using the electric tool 2, working on the work position 7 indicated by the visible light 8 (step S17). The state detector 24 of the electric tool 2 detects the start of the work by the operator 6, and the work result processor 285 of the electric tool 2 transmits the detection result (work start information) by the state detector 24 to the work position indicator 3 as the work result d5 (step S18). The work position indicator 3 then receives the work start information (work result d5) from the electric tool 2 (step S19) and stores the work start information (work result d5) thus received in the storage unit 37 in association with the position data d2 corresponding to the work position 7 (step S20).

When the operator 6 ends the work (step S21), the state detector 24 of the electric tool 2 then detects the end of the work. The state detector 24 further detects the operation waveform during the work of the electric tool 2. The work result processor 285 of the electric tool 2 transmits the detection result (the work end information and the operation waveform information) by the state detector 24 to the work position indicator 3 as the work result d5 (step S22). The operation waveform information is information the operation waveform during the work of the electric tool 2, the operation waveform being detected by the state detector 24. Then, the work position indicator 3 receives the work end information and the operation waveform information from the electric tool 2 (step S23). The work position indicator 3 then stores the work end information and the operation waveform information (work result d5) thus received in the storage unit 37 in association with the position data d2 corresponding to the work position 7 (S20).

Then, the work completion decider 386 of the work position indicator 3 decides, for all of the plurality of work positions 7 to be worked by the operator 6, whether or not the work by using the electric tool 2 has been carried out (step S24). If the work completion decider 386 decides that the work by using the electric tool 2 has not been carried out on all of the plurality of work positions 7 (step S24: No), the process of shifting to step S7 is repeated for a next work position 7. On the other hand, if the work completion decider 386 decides that the predetermined work by using the electric tool 2 has been carried out on all of the plurality of work positions 7 (step S24: Yes), the work completion decider 386 transmits each of the work results d5 on the plurality of work positions 7 to the construction managing terminal 4 (step S25).

The construction managing terminal 4 receives the work result d5 from the work position indicator 3 and then transmits the work results d5 thus received to the construction managing system 5 (step S26). The construction managing system 5 receives the work results d5 from the construction managing terminal 4 and then stores the received work results d5 in association with pieces of position data d2 corresponding to the work results d5 (step S27). Then, the process by the electric tool system 1 is completed.

### (1-6) Main Effect

The electric tool system 1 described above includes the work position indicator 3, the electric tool 2, the tool position detector 36, the tool position decider 384, and the tool controller 385. The work position indicator 3 is configured to indicate the work position 7 by projecting the visible light 8 having a converging characteristic at the work site. The electric tool 2 is configured to carry out work on the work position 7 indicated by the visible light 8. The tool position detector 36 is configured to detect the relative position of the electric tool 2 with respect to the work position 7. The tool position decider 384 is configured to decide whether or not the electric tool 2 is set on the work position 7 with reference to the detection result by the tool position detector 36 before the electric tool 2 carries out the work on the work position 7. In the present embodiment, as an example, the tool position detector 36 and the tool position decider 384 are disposed in the work position indicator 3.

With this configuration, the work position indicator 3 at the work site indicates the work position 7 by projecting the visible light 8. Before the electric tool 2 carries out the work on the work position 7, whether or not the electric tool 2 is set on the work position 7 is decided with reference to the detection result by the tool position detector 36. This enables the electric tool 2 to be quickly set on a correct work position 7, and thereby, the work on the correct work position 7 can be quickly carried out by the electric tool 2. This consequently enables the work position indicator 3 to quickly indicate a next work position, thereby improving the work efficiency when the work is carried out on the work position 7 of the work site by using the electric tool 2.

### (2) Electric Tool, Method of Controlling Electric Tool, and Program

Functions similar to those of the electric tool system 1 according to the embodiment described above may be implemented by the electric tool 2, the method of controlling an electric tool, a computer program (program), a non-transitory storage medium storing a computer program, or the like.

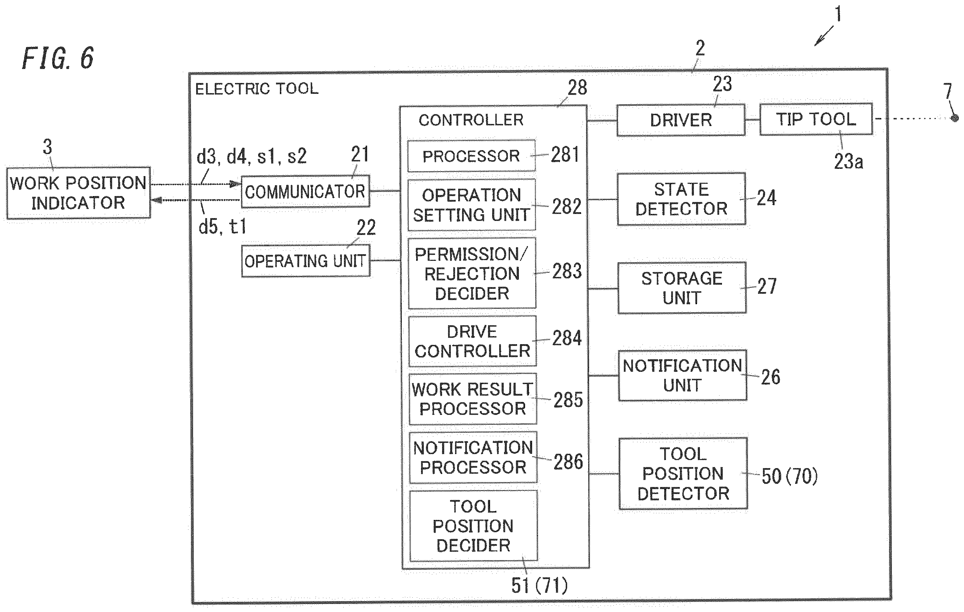

An electric tool (see FIG. 6) according to an aspect is the electric tool 2 configured to carry out work on a work position indicated by visible light having a converging characteristic at a work position 7. The electric tool 2 includes a tool position detector 50 and a tool position decider 51. The tool position detector 50 detects a relative position of the electric tool 2 with respect to the work position 7. The tool position decider 51 decides whether or not the electric tool 2 is set on the work position 7 with reference to a detection result by the tool position detector 50.

A method (see FIGS. 4A to 5B) of controlling an electric tool according to an aspect includes a first step (step S10), a second step (step S17), a third step (step S11), and a fourth step (step S12). The first step includes indicating the work position 7 by projecting visible light 8 (visible light) at the work site by using the work position indicator 3. The second step includes carrying out work by using the electric tool 2 on the work position 7 indicated by the visible light 8. The third step includes detecting a relative position of the electric tool 2 with respect to the work position 7. The fourth step includes deciding whether or not the electric tool 2 is set on the work position 7 with reference to a detection result in the third step before the electric tool 2 carries out the work on the work position 7.

A program according to an aspect is configured to causes one or more processors to execute the method of controlling an electric tool.

A non-transitory recording medium according to an aspect temporarily stores a program configured to cause one or more processors to execute the method of controlling an electric tool.

### (3) Variations

Variations of the embodiment will be described below. The embodiment described above and the variations described below may be implemented in combination.

### (3-1) First Variation

In the embodiment described above, the tool position detector 36 and the tool position decider 384 are disposed in the work position indicator 3. However, in the present variation, a tool position detector 50 and a tool position decider 51 are disposed in an electric tool 2 as shown in FIG. 6.

A work position indicator 3 of the present variation is different from the work position indicator 3 of the embodiment described above in that the tool position detector 36 and the tool position decider 384 are not provided, and additionally, in that the tool controller 385 is not provided. Further, the electric tool 2 of the present variation is different from the electric tool 2 of the embodiment described above in that the tool position detector 50 and the tool position decider 51 are provided and additionally, in that the light receiver 25 is not provided, and in that the operation of the permission/rejection decider 283 differs. Operation of each of the tool position detector 50, the tool position decider 51, and the permission/rejection decider 283 in the present variations will be described below.

The tool position detector 50 receives a reflected wave of an electromagnetic wave (e.g., visible light 8) having a converging characteristic, transmitted from the work position indicator 3 to a work position 7, and reflected off the work position 7. Then, based on the reception intensity at the time of the reception, the tool position detector 50 detects the relative position of the electric tool 2 with respect to the work position 7. In the present variation, the visible light 8 projected from the projector 33 of the work position indicator 3 is also used as the electromagnetic wave used by the tool position detector 50 to detect the relative position.

The tool position decider 51 is disposed in a controller 28 of the electric tool 2. Before the electric tool 2 carries out the work on the work position 7 indicated by the visible light 8, the tool position decider 51 decides, based on a detection result by the tool position detector 50, whether or not the electric tool 2 is set on the work position 7 indicated by the visible light 8.

The permission/rejection decider 283 of the present variation decides whether the operation of the electric tool 2 is permitted or rejected, based on a decision result by the tool position decider 51, instead of the operation permission signal s1 and the operation rejection signal s2. That is, if the tool position decider 51 decides that the electric tool 2 is set on the work position 7 indicated by the visible light 8, the permission/rejection decider 283 permits the operation of the electric tool 2. On the other hand, if the tool position decider 51 decides that the electric tool 2 is not set on the work position 7 indicated by the visible light 8, the permission/rejection decider 283 rejects the operation of the electric tool 2.

The present variation enables the electric tool 2 to detect the relative position of the electric tool 2 with respect to the work position 7 with reference to the reception intensity of a reflected wave of the electromagnetic wave (e.g., the visible light 8) transmitting from the work position indicator 3 and then reflected off the work position 7. In particular, the reception intensity of the electromagnetic wave reflected off the work position 7 rapidly decreases as the distance from the work position 7 increases, and therefore, the electromagnetic wave is only receivable substantially in the vicinity of the work position 7. Therefore, depending on whether or not the reflected waves of the electromagnetic waves reflected off the work position 7 can be substantially received by the electric tool 2, it can be easily detected whether or not the electric tool 2 is disposed near the work position 7 (i.e., whether the electric tool 2 is set on the work position 7).

### (3-2) Second Variation

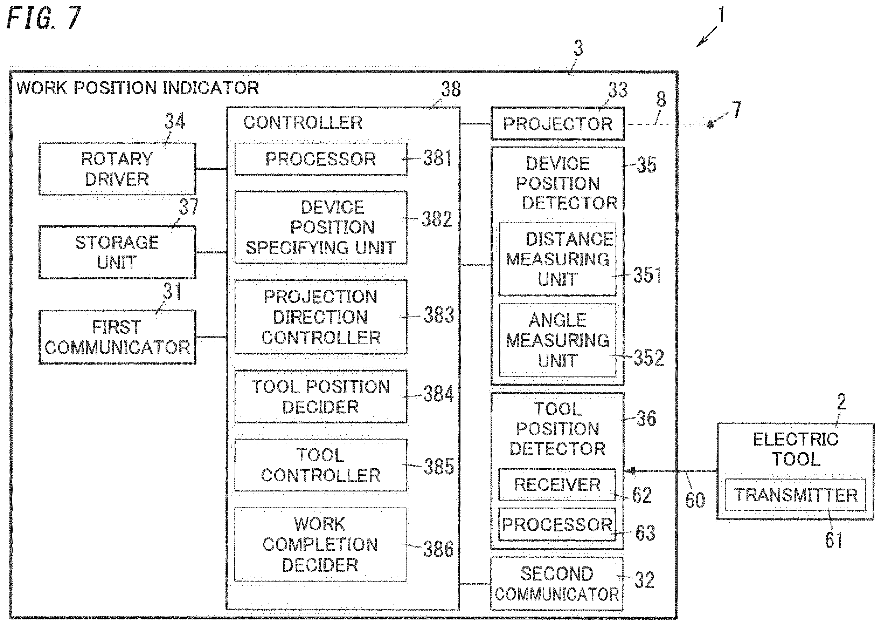

In the embodiment described above, the tool position detector 36 of the work position indicator 3 detects the relative position of the electric tool 2 with respect to the work position 7 with reference to the reception intensity of the reflected wave of the visible light 8 reflected off the work position 7. In contrast, in the present variation, as shown in FIG. 7, a tool position detector 36 receives an electromagnetic wave 60 transmitted from an electric tool 2, and based on reception intensity and a reception direction of the electromagnetic wave 60 thus received, the tool position detector 36 detects a relative position of the electric tool 2 with respect to a work position 7.

The electric tool 2 of the present variation includes a transmitter 61 configured to transmit the electromagnetic wave 60. The electric tool 2 of the present variation is based on the electric tool 2 of the embodiment described above, where the light receiver 25 is omitted and the transmitter 61 is added. In FIG. 7, of components of the electric tool 2, components other than the transmitter 61 are omitted.

The tool position detector 36 of a work position indicator 3 of the present variation includes a plurality of receivers 62 and a processor 63. The plurality of receivers 62 are aligned in a predetermined arrangement. In FIG. 7, only one receiver 62 is shown for the convenience of drawing. The plurality of receivers 62 receive the electromagnetic wave 60 from the electric tool 2. The processor 63 detects a reception direction and reception intensity of the electromagnetic wave 60 received by the plurality of receivers 62 from distribution of outputs (reception intensities) of the plurality of receivers 62. Further, the processor 63 detects a relative position of the electric tool 2 with respect to the work position indicator 3 from the reception direction and the reception intensity thus detected. More specifically, the processor 63 detects: a relative direction from the work position indicator 3 to the electric tool 2 from the reception direction thus detected; and a relative distance of the electric tool 2 to the work position indicator 3 from the reception intensity thus detected. The processor 63 then detects the relative position of the electric tool 2 with respect to the work position 7 from: a detection result (the relative position of the electric tool 2 with respect to the work position indicator 3); a specified result by the device position specifying unit 382 (an arrangement position of the work position indicator 3 on 3D data d1); and position data d2 (the position of the work position 7 on the 3D data d1).

The present variation enables the work position indicator 3 to detect the relative position of the electric tool 2 with respect to the work position 7 with reference to the electromagnetic wave 60 from the electric tool 2.

### (3-3) Third Variation

In the embodiment described above, the tool position detector 36 and the tool position decider 384 are disposed in the work position indicator 3, and the tool position detector 36 detects the relative position of the electric tool 2 with respect to the work position 7 with reference to the reception intensity of the reflected wave of the visible light 8 reflected off the work position 7. In contrast, the present variation includes a tool position detector 70 and a tool position decider 71 which are provided in an electric tool 2 as shown in FIG. 6. A work position indicator 3 transmits an electromagnetic wave (e.g., visible light 8) having a converging characteristic while changing the transmission direction of the electromagnetic wave with transmission direction information being superimposed on the electromagnetic wave. The transmission direction information is information on a transmission direction at the time of transmitting the electromagnetic wave. The tool position detector 70 detects a relative position of the electric tool 2 with respect to a work position 7 with reference to reception intensity of the electromagnetic wave thus received and the transmission direction information superimposed on the electromagnetic wave thus received.

The work position indicator 3 of the present variation is different from the work position indicator 3 (see FIG. 2) of the embodiment described above in that the tool position detector 36 and the tool position decider 384 are not provided, and additionally, in that that the tool controller 385 is not provided. Further, the electric tool 2 of the present variation is different from the electric tool 2 of the embodiment described above in that the tool position detector 70 and the tool position decider 71 are provided and additionally, in that the light receiver 25 is not provided, and in that the operation of the permission/rejection decider 283 differs.

In the work position indicator 3 of the present variation, a projection direction controller 383 performs the following operation for detecting the relative position of the electric tool 2 with respect to the work position 7 in addition to the operation of the projection direction controller 383 of the embodiment described above. That is, before instructing the work position 7 by the visible light 8 from a projector 33, the projection direction controller 383 controls a rotational driver 34 to emit the visible light 8 over a certain range (e.g., the entire work site) including the work position 7 at the work site while slightly changing the direction of the projector 33 (i.e., the emission direction of the visible light 8) in horizontal and vertical directions. As described above, the visible light 8 is transmitted while the transmission direction of the visible light 8 is gradually changed, and thereby, the visible light 8 is projected while scanning a certain range including the work position 7 at the work site. Thus, the projection direction controller 383 can cause the electric tool 2 to receive the visible light 8 even when the position of the electric tool 2 is not specified at the work site. Further, at the time of transmission of the visible light 8, the projection direction controller 383 transmits transmission direction information on the transmission direction of the visible light 8 with the transmission direction information being superimposed on the visible light 8. The "transmission direction at the time of transmission" is determined based on the rotational amount around axes of rotation A1 and A2 of the rotational driver 34 at the time of transmission.

The work position indicator 3 of the present variation transmits position data d2 and a specified result by a device position specifying unit 382 together with a work condition d4 and a work type d3 from a second communicator 32 to the electric tool 2.

In the electric tool 2 of the present variation, the tool position detector 70 receives the visible light 8 transmitted from the work position indicator 3 with the transmission direction of the visible light 8 being changed, and the tool position detector 70 then detects the relative position of the electric tool 2 with respect to the work position 7 with reference to the reception intensity of the visible light 8 thus received and the transmission direction information superimposed on the visible light 8 thus received. More specifically, the tool position detector 70 obtains a relative position of the electric tool 2 with respect to the work position indicator 3 with reference to the reception intensity of the visible light 8 thus received and the transmission direction information superimposed on the visible light 8 thus received. That is, the tool position detector 70 detects a relative direction from the work position indicator 3 to the electric tool 2 from the reception direction information thus received and a relative distance of the electric tool 2 to the work position indicator 3 from the reception intensity thus received. Then, the tool position detector 70 detects the relative position of the electric tool 2 with respect to the work position 7 from: the relative position thus obtained; the position data d2 (the position of the work position 7 on 3D data d1) received via the second communicator 32; and the specified result (the arrangement position of the work position indicator 3 on the 3D data d1) by the device position specifying unit 382.

The tool position decider 71 and the permission/rejection decider 283 of the electric tool 2 of the present variation perform the same operation as the tool position decider 51 and the permission/rejection decider 283 of the first variation.

The present variation enables the electric tool 2 to detect the relative position of the electric tool 2 with respect to the work position 7 with reference to the electromagnetic wave (visible light 8) from the work position indicator 3 can detect.

### (3-4) Fourth Variation

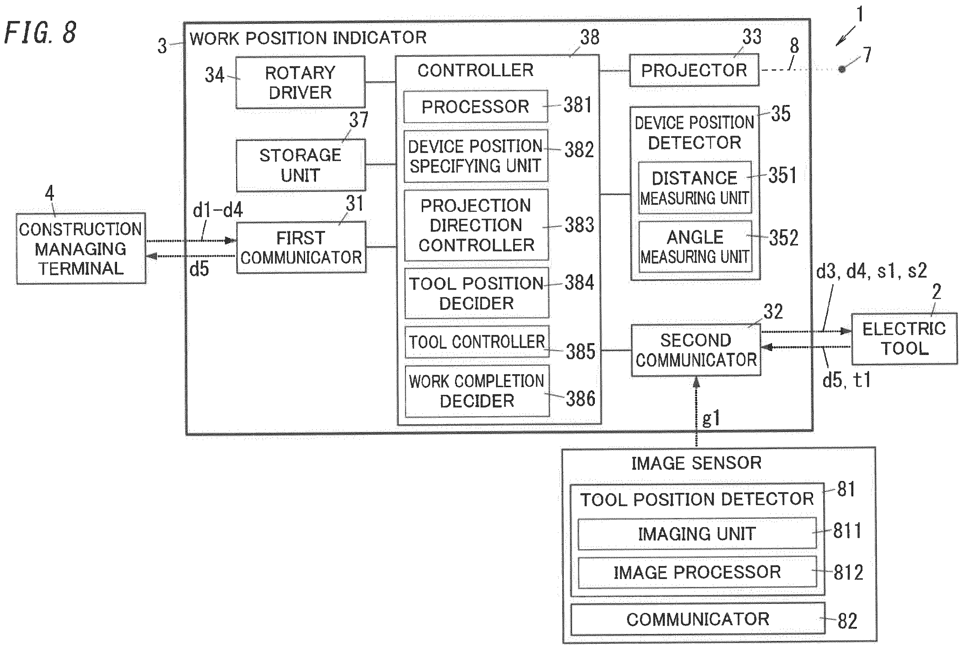

In the embodiment described above, the tool position detector 36 (see FIG. 2) detects the relative position of the electric tool 2 with respect to the work position 7 with reference to the reception intensity of the reflected wave of the visible light 8. In contrast, in the present variation, a tool position detector 81 (see FIG. 8) captures an image of a work position 7 and its periphery (including an electric tool 2) indicated by visible light 8, and the tool position detector 81 detects the relative position based on the captured image.

In the present variation, the tool position detector 81 is provided in an image sensor device 80. The image sensor device 80 is a device other than a work position indicator 3 and the electric tool 2. More specifically, the image sensor device 80 is a device other than the work position indicator 3, a construction managing terminal 4, and the electric tool 2. The image sensor device 80 is, for example, installed in a predetermined position of the work site (e.g., a position from which the entire work site can be seen). In this variation, the image sensor device 80 is a component of the electric tool system 1 of the present variation.

As shown in FIG. 8, the image sensor device 80 includes the tool position detector 81 and a communicator 82. The tool position detector 81 includes an imaging unit 811 and an image processor 812.

The Imaging unit 811 captures an image of the work position 7 and its periphery (including the electric tool 2) indicated by the visible light 8. In the present variation, the imaging unit 811 captures a still image, but the imaging unit 811 may capture a moving image. The image processor 812 processes the image captured by the imaging unit 811 to recognize a light spot (i.e., the work position 7) of the visible light 8 and the electric tool 2. Then, the image processor 812 detects the relative position of the electric tool 2 with respect to the work position 7 from: the sizes of the light spot thus recognized and the electric tool 2; and a relative arrangement between the light spot and the electric tool 2. The communicator 82 performs wireless communication with a second communicator 32 of the work position indicator 3. The communicator 82 transmits a detection result gl (i.e., a processing result by the image processor 812) by the tool position detector 81 to the second communicator 32 of the work position indicator 3. In the work position indicator 3, a tool position decider 384 then decides whether or not the electric tool 2 is set on the work position 7 indicated by the visible light 8 with reference to the detection result by the tool position detector 81, the detection result being received by the second communicator 32.

According to the present variation, the relative position of the electric tool 2 with respect to the work position 7 is detected with reference to the captured image.

Note that in the present variation, the tool position decider 384 of the work position indicator 3 may also be disposed in the image sensor device 80 together with the tool position detector 81. In this case, the tool controller 385 of the work position indicator 3 is omitted. Moreover, in this case, in the image sensor device 80, the tool position decider 384 decides whether or not the electric tool 2 is set on the work position 7 with reference to the detection result by the tool position detector 81. Then, the tool position decider 384 transmits a decision result, from the communicator 82 as an operation permission signal s1 or an operation rejection signal s2 to the electric tool 2.

In the present variation, the tool position detector 81 (the imaging unit 811 and the image processor 812) is provided in the image sensor device 80, which is a device other than the work position indicator 3, the electric tool 2, and the construction managing terminal 4, but the tool position detector 81 may be disposed in the work position indicator 3. The configuration of the work position indicator 3 in this case is based on the configuration shown in FIG. 2, where the tool position detector 36 is replaced with the tool position detector 81 of FIG. 8. In this instance, the image sensor device 80 is omitted.

### (3-5) Fifth Variation

The present variation is based on the third variation, where the operation setting set in the electric tool 2 may be changed by the electromagnetic wave (e.g., the visible light 8) transmitted from the work position indicator 3.

The work position indicator 3 of the present variation is based on the work position indicator 3 of the third variation, where the work position indicator additionally performs the following operation. That is, when the work position indicator 3 (the projection direction controller 383) of the present variation transmits the electromagnetic wave while gradually changing the transmission direction of the magnetic wave, a change condition is also superimposed on the electromagnetic wave together with the transmission direction information. Thus, the change condition is transmitted via the electromagnetic wave from the work position indicator 3 to the electric tool 2. Note that the change condition is an operation condition that defines an operation setting that differs from the operation setting already set in the electric tool 2.

The communicator 21 receives the electromagnetic wave, and based on the change condition superimposed on the electromagnetic wave thus received, the operation setting unit 282 of the electric tool 2 of the present variation then changes the operation setting already set in the electric tool 2 to an operation setting satisfying the change condition. In this way, the operation setting of the electric tool 2 is changed to the operation setting satisfying the change condition.

According to the present variation, the operation setting set in the electric tool 2 is changed by utilizing the electromagnetic wave used by the tool position detector 36 to detect the relative position of the electric tool 2 with respect to the work position 7.

In the present variation, an example of transmitting the change condition for changing the operation setting of the electric tool 2 is explained, but information (e.g., the work type d3 and the work condition d4) other than the change condition superimposed on the electromagnetic wave may be transmitted to the electric tool 2.

The present variation exemplifies an application to third variation. However, the present variation may be applied to the embodiment or the first variation described above. When the present variation is applied to the embodiment described above, the work position indicator 3 (the projection direction controller 383) superimposes the change condition on the visible light 8 projected from the projector 33 to indicate the work position 7. The light receiver 25 receives reflected wave of the visible light 8 reflected off the work position 7, and based on the change condition superimposed on the reflected light thus received, the operation setting unit 282 of the electric tool 2 of the present variation then changes the operation setting already set in the electric tool 2 to the operation setting satisfying the change condition.

### (3-6) Sixth Variation

In the embodiment described above, an example is shown in which the tool position detector 36 and the tool position decider 384 are disposed in the work position indicator 3. However, the tool position detector 36 and the tool position decider 384, instead of being disposed in the work position indicator 3, may be disposed in the electric tool 2, or may be disposed in another device other than the work position indicator 3 and the electric tool 2. According to this configuration, application of the present disclosure is possible when the tool position detector 36 and the tool position decider 384 is disposed in the electric tool 2 or the another device.

### (3-7) Seventh Variation

In the electric tool system 1 of the embodiment described above, an example including the construction managing terminal 4 (relay terminal) is shown, but the construction managing terminal 4 may be omitted. In this instance, the construction managing system 5 transmits various types of data (the 3D data d1, the position data d2, the work type, and the work condition d4) to the work position indicator 3 without using the construction managing terminal 4. Moreover, the work position indicator 3 transmits the work result d5 to the construction managing system 5 without using the construction managing terminal 4.

### (4) Aspects

From the embodiments and the variations described above, the present disclosures may have the following aspects.

An electric tool system (1) of a first aspect includes a work position indicator (3), an electric tool (2), a tool position detector (36; 50; 70; 81), and a tool position decider (384; 51; 71). The work position indicator (3) is configured to indicate a work position (7) by projecting visible light (8) having a converging characteristic at a work site. The electric tool (2) is configured to carry out work on the work position (7) indicated by the visible light (8). The tool position detector (36; 50; 70; 81) is configured to detect a relative position of the electric tool (2) with respect to the work position (7). The tool position decider (384; 51; 71) is configured to decide whether or not the electric tool (2) is set on the work position (7) with reference to a detection result by the tool position detector (36; 50; 70; 81) before the electric tool (2) carries out the work on the work position (7).

With this configuration, the work position indicator (3) projects the visible light (8) having a converging characteristic at the work site, thereby indicating the work position (7). Before the electric tool (2) carries out the work on the work position (7), whether or not the electric tool (2) is set on the work position (7) is decided with reference to the detection result by the tool position detector (36; 50; 70; 81). This enables the electric tool (2) to be quickly set on a correct work position (7), and thereby, the work on the correct work position (7) can be quickly carried out by the electric tool (2). This consequently enables the work position indicator (3) to quickly indicate a next work position (7), thereby improving the work efficiency when the work is carried out on the work position (7) of the work site by using the electric tool (2).

In an electric tool system (1) of a second aspect referring to the first aspect, the electric tool (2) is configured to, when the tool position decider (384) decides that the electric tool (2) is not set on the work position (7), stop the electric tool (2) or notify a person around the electric tool (2) of the electric tool (2) not being set on the work position (7).

With this configuration, when the tool position decider (384) decides that the electric tool (2) is not set on the work position (7), a person (an operator 6) around the electric tool (2) is notified of the electric tool (2) not being set on the work position (7). This prompts the operator (6) to set the electric tool (2) on the work position (7). In addition, the electric tool (2) is stopped, and therefore, work can be prevented from being carried out on an incorrect work position by using the electric tool (2).

In an electric tool system (1) of a third aspect referring to the first or second aspect, the tool position detector (36) and the tool position decider (384) are disposed in the work position indicator (3), the electric tool (2), or a device (80) other than the work position indicator (3) and the electric tool (2).

With this configuration, the present disclosure is applicable when the tool position detector (36) and the tool position decider (384) are disposed in the work position indicator (3), the electric tool (2), or the device (80).

In an electric tool system (1) of a fourth aspect referring to any one of the first to third aspects, the tool position detector (36) is disposed in the work position indicator (3). The tool position detector (36) is configured to transmit an electromagnetic wave (8) having a converging characteristic toward the work position (7). The electric tool (2) is configured to receive a reflected wave of the electromagnetic wave (8) reflected off the work position (7) and transmit a reception intensity signal (tl) on a reception intensity of the reflected wave to the work position indicator (3). The tool position detector (36) is configured to detect the relative position with reference to the reception intensity signal (t1) received by the work position indicator (3).

This configuration enables the work position indicator (3) to detect the relative position with reference to the reception intensity of the reflected wave of the electromagnetic wave (8) transmitting from the work position indicator (3) and then reflected off the work position (7). In particular, the reception intensity of the electromagnetic wave (8) reflected off the work position (7) rapidly decreases as the distance from the work position (7) increases, and therefore, the electromagnetic wave is only receivable substantially in the vicinity of the work position (7). Therefore, whether or not the electric tool 2 is disposed near the work position (7) (i.e., whether the electric tool (2) is set on the work position (7)) is easily determined depending on whether or not the reflected wave of the electromagnetic wave (8) reflected off the work position (7) can be substantially received by the electric tool (2).

In an electric tool system (1) of a fifth aspect referring to any one of the first to third aspects, the tool position detector (50) is disposed in the electric tool (2). The work position indicator (3) is configured to transmit an electromagnetic wave (8) having a converging characteristic toward the work position (7). The tool position detector (50) is configured to receive a reflected wave of the electromagnetic wave (8) reflected off the work position (7) and detect the relative position with reference to reception intensity of the reflected wave thus received.

This configuration enables the electric tool (2) to detect the relative position with reference to the reception intensity of the reflected wave of the electromagnetic wave (8) transmitting from the work position indicator (3) and then reflected off the work position (7). In particular, the reception intensity of the electromagnetic wave (8) reflected off the work position (7) rapidly decreases as the distance from the work position (7) increases, and therefore, the electromagnetic wave is only receivable substantially in the vicinity of the work position (7). Therefore, whether or not the electric tool 2 is disposed near the work position (7) (i.e., whether the electric tool (2) is set on the work position (7)) is easily determined depending on whether or not the reflected wave of the electromagnetic wave (8) reflected off the work position (7) can be substantially received by the electric tool (2).

In an electric tool system (1) of a sixth aspect referring to any one of the first to third aspects, the tool position detector (36) is disposed in the work position indicator (3). The electric tool (2) is configured to transmit an electromagnetic wave (60). The tool position detector (36) is configured to receive the electromagnetic wave (60) transmitted from the electric tool (2) and detect the relative position with reference to reception intensity and a reception direction of the electromagnetic wave (60) thus received.

This configuration enables the work position indicator (3) to detect the relative position with reference to the electromagnetic wave (60) from the electric tool (2).

In an electric tool system (1) of a seventh aspect referring to any one of the first to third aspects, the tool position detector (36) is disposed in the electric tool (2). The work position indicator (3) is configured to transmit the electromagnetic wave (8) having a converging characteristic in a certain range including the work position (7) at the work site while changing a transmission direction of the electromagnetic wave (8), transmission direction information on the transmission direction at a time of transmission of the electromagnetic wave (8) being superimposed on the electromagnetic wave (8). The tool position detector (36) is configured to detect the relative position with reference to reception intensity of the electromagnetic wave (8) thus received and the transmission direction information superimposed on the electromagnetic wave (8) thus received.

This configuration enables the electric tool (2) to detect the relative position with reference to the electromagnetic wave (8) from the work position indicator (3).

In an electric tool system (1) of an eighth aspect referring to any one of the first to third aspects, the tool position detector (81) is disposed in the work position indicator (3) or a device (80). The tool position detector (81) includes an imaging sensor and is configured to capture an image of the electric tool (2) and the work position (7) indicated by the visible light (8) from the work position indicator (3) and detect the relative position with reference to the image thus captured.

With this configuration, the relative position is detected with reference to the image thus captured.

In an electric tool system (1) of a ninth aspect referring to the seventh aspect, the electric tool (2) is configured to drive a tip tool (23a) mounted on the electric tool (2) in accordance with an operation setting set in the electric tool (2). The work position indicator (3) is configured to transmit a change condition for changing the operation setting with the change condition being superimposed on the electromagnetic wave (8). The electric tool (2) is configured to, when receiving the electromagnetic wave (8), change the operation setting to an operation setting satisfying the change condition superimposed on the electromagnetic wave (8) thus received.

With this configuration, the operation setting set in the electric tool (2) is changed by utilizing the electromagnetic wave (8) used by the tool position detector (36) to detect the relative position of the electric tool (2) with respect to the work position (7).

In an electric tool system (1) of a tenth aspect referring to any one of the first to ninth aspects, the electric tool (2) is configured to transmit work end information to the work position indicator (3) when the work is completed. The work position indicator (3) is configured to, when receiving the work end information, indicate a next work position (7) by the visible light (8) at the work site.

With this configuration, the work position indicator (3) receives the work end information, and thereby, the work position indicator (3) quickly detects that the electric tool (2) has finished the work, so that the work position indicator (3) indicates a next work position (7) by the visible light (8).

In an electric tool system (1) of an eleventh aspect referring to any one of the first to tenth aspects, the electric tool (2) is configured to transmit an operation waveform of the electric tool (2) while the work is carried out to the work position indicator (3) when the work ends. The work position indicator (3) is configured to transmit the operation waveform thus received directly to an external system (5) or via the relay terminal (4) to the external system (5), the operation waveform being transmitted in association with the work position (7).

With this configuration, after the work by the electric tool (2) ends, the operation waveform of the electric tool (2) while the work is carried out is transmitted to the external system (5) in association with the work position (7). Thus, the operation waveform of the electric tool (2) while the work is carried out is managed by the external system (5) in association with the work position (7).

In an electric tool system (1) of a twelfth aspect referring to any one of the first to eleventh aspects, the work position indicator (3) is configured to receive various types of information on 3D data (d1) of the work site, position data (d2) of the work position (7), a work type (d3) of the work, and a work condition (d4) of the work directly from the external system (5) or via the relay terminal (4) from the external system (5).

With this configuration, the work position (7) indicated by the visible light (8) at the work site is specified by the various types of data (the 3D data, the position data, the work type, and the work condition) from the external system (5).

An electric tool (2) of a thirteenth aspect is an electric tool configured to carry out work on a work position (7) indicated by visible light (8) having a converging characteristic at a work site. The electric tool (2) includes a tool position detector (36; 50; 70) and a tool position decider (384; 51; 71). The tool position detector (36; 50; 70) is configured to detect a relative position of the electric tool (2) with respect to the work position (7). The tool position decider (384; 51; 71) is configured to decide whether or not the electric tool (2) is set on the work position (7) with reference to a detection result by the tool position detector (36; 50; 70) before the electric tool (2) carries out the work on the work position (7).

This configuration provides the electric tool (2) including the tool position detector (36; 50; 70) and the tool position decider (384; 51; 71) of the first aspect. That is, the electric tool (2) having the operation and effects of the first aspect is be provided.

A method of controlling an electric tool of a fourteenth aspect includes a first step (step S10), a second step (step S17), a third step (step S11), and a fourth step (step S12). The first step (step S10) includes indicating a work position (7) at a work site by projecting visible light (8) by using a work position indicator (3). The second step (step S17) includes carrying out, by using the electric tool (2), work on the work position (7) indicated by the visible light (8). The third step (step S11) includes detecting a relative position of the electric tool (2) with respect to the work position (7). The fourth step (step S12) includes deciding whether or not the electric tool (2) is set on the work position (7) with reference to a detection result in the third step before the electric tool (2) carries out the work on the work position (7).

This configuration provides a method of controlling the electric tool, the method providing the same effects as the effect of the electric tool system (1) of the first aspect.

A program of the fifteenth aspect is configured to cause one or more processors to execute the method of controlling the electric tool of the fourteenth aspect.

This configuration provides a program for causing one or more processors to execute the method of controlling the electric tool.

### Reference Signs List

- 1: Electric Tool System

- 2: Electric Tool
- 3: Work Position Indicator
- 4: Construction Managing Terminal (Relay Terminal)
- 5: Construction Managing System (External Systems)
- 7: Work Position
- 8: Visible-Light Laser (Visible Light, Electromagnetic Wave, First Electromagnetic Wave)
- 23a: Tip Tool
- 36, 50, 70, 81: Tool Position Detector
- 60: Electromagnetic Wave
- 80: Image Sensor Device
- 384,51,71: Tool Position Decider
- d1: 3D Data
- d2: Position Data
- d3: Work Type
- d4: Work Conditions
- t1: Reception Intensity Signal

## Claims

1. An electric tool system (1) comprising:
a work position indicator (3) configured to indicate a work position (7) by projecting visible light (8) having a converging characteristic at a work site;
an electric tool (2) configured to carry out work on the work position (7) indicated by the visible light (8);
a tool position detector (36; 50; 70; 81) configured to detect a relative position of the electric tool (2) with respect to the work position (7); and
a tool position decider (384; 51; 71) configured to decide whether or not the electric tool (2) is set on the work position (7) with reference to a detection result by the tool position detector (36; 50; 70; 81) before the electric tool (2) carries out the work on the work position (7).

2. The electric tool system (1) of claim 1, wherein
the electric tool (2) is configured to, when the tool position decider (384) decides that the electric tool (2) is not set on the work position (7), stop the electric tool (2) or notify a person around the electric tool (2) of the electric tool (2) not being set on the work position (7).

3. The electric tool system (1) of claim 1 or 2, wherein
the tool position detector (36) and the tool position decider (384) are disposed in the work position indicator (3), the electric tool (2), or a device (80) other than the work position indicator (3) and the electric tool (2).

4. The electric tool system (1) of any one of claims 1 to 3, wherein
the tool position detector (36) is disposed in the work position indicator (3),
the tool position detector (36) is configured to transmit an electromagnetic wave (8) having a converging characteristic toward the work position (7),
the electric tool (2) is configured to receive a reflected wave of the electromagnetic wave (8) reflected off the work position (7) and transmit a reception intensity signal (tl) on a reception intensity of the reflected wave to the work position indicator (3), and
the tool position detector (36) is configured to detect the relative position with reference to the reception intensity signal (t1) received by the work position indicator (3).

5. The electric tool system (1) of any one of claims 1 to 3, wherein
the tool position detector (50) is disposed in the electric tool (2),
the work position indicator (3) is configured to transmit an electromagnetic wave (8) having a converging characteristic toward the work position (7), and
the tool position detector (50) is configured to receive a reflected wave of the electromagnetic wave (8) reflected off the work position (7) and detect the relative position with reference to reception intensity of the reflected wave thus received.

6. The electric tool system (1) of any one of claims 1 to 3, wherein
the tool position detector (36) is disposed in the work position indicator (3),
the electric tool (2) is configured to transmit an electromagnetic wave (60), and
the tool position detector (36) is configured to receive the electromagnetic wave (60) transmitted from the electric tool (2) and detect the relative position with reference to reception intensity and a reception direction of the electromagnetic wave (60) thus received.

7. The electric tool system (1) of any one of claims 1 to 3, wherein
the tool position detector (36) is disposed in the electric tool (2),
the work position indicator (3) is configured to transmit an electromagnetic wave (8) having a converging characteristic in a certain range including the work position (7) at the work site while changing a transmission direction of the electromagnetic wave (8), transmission direction information on the transmission direction at a time of transmission of the electromagnetic wave (8) being superimposed on the electromagnetic wave (8), and
the tool position detector (36) is configured to detect the relative position with reference to reception intensity of the electromagnetic wave (8) thus received and the transmission direction information superimposed on the electromagnetic wave (8) thus received.

8. The electric tool system (1) of any one of claims 1 to 3, wherein
the tool position detector (81) is disposed in one of the work position indicator (3) or a device (80) other than the work position indicator (3) and electric tool (2), and
the tool position detector (81) includes an imaging sensor and is configured to capture an image of the electric tool (2) and the work position (7) indicated by the visible light (8) from the work position indicator (3) and detect the relative position with reference to the image thus captured.

9. The electric tool system (1) of claim 7, wherein
the electric tool (2) is configured to drive a tip tool (23a) mounted on the electric tool (2) in accordance with an operation setting set in the electric tool (2),
the work position indicator (3) is configured to transmit a change condition for changing the operation setting with the change condition being superimposed on the electromagnetic wave (8), and
the electric tool (2) is configured to, when receiving the electromagnetic wave (8), change the operation setting to an operation setting satisfying the change condition superimposed on the electromagnetic wave (8) thus received.

10. The electric tool system (1) of any one of claims 1 to 9, wherein
the electric tool (2) is configured to transmit work end information to the work position indicator (3) when the work is completed, and
the work position indicator (3) is configured to, when receiving the work end information, indicate a next work position (7) by the visible light (8) at the work site.

11. The electric tool system (1) of any one of claims 1 to 10, wherein
the electric tool (2) is configured to transmit an operation waveform of the electric tool (2) while the work is carried out to the work position indicator (3) when the work ends, and
the work position indicator (3) is configured to transmit the operation waveform thus received directly to an external system (5) or via the relay terminal (4) to the external system (5), the operation waveform being transmitted in association with the work position (7).

12. The electric tool system (1) of any one of claims 1 to 11, wherein
the work position indicator (3) is configured to receive various types of information on 3D data (d1) of the work site, position data (d2) of the work position (7), a work type (d3) of the work, and a work condition (d4) of the work directly from the external system (5) or via the relay terminal (4) from the external system (5).

13. An electric tool (2) configured to carry out work on a work position (7) indicated by visible light (8) having a converging characteristic at a work site, the electric tool (2) comprising:
a tool position detector (36; 50; 70) configured to detect a relative position of the electric tool (2) with respect to the work position (7); and
a tool position decider (384; 51; 71) configured to decide whether or not the electric tool (2) is set on the work position (7) with reference to a detection result by the tool position detector (36; 50; 70) before the electric tool (2) carries out the work on the work position (7).

14. A method of controlling an electric tool, the method comprising:
indicating a work position (7) by projecting visible light (8) having a converging characteristic at a work site by using the work position indicator (3);
carrying out work, by using the electric tool (2), on the work position (7) indicated by the visible light (8);
detecting a relative position of the electric tool (2) with respect to the work position (7); and
deciding whether or not the electric tool (2) is set on the work position (7) with reference to a detection result in the detecting of the relative position before the electric tool (2) carries out the work on the work position (7).

15. A program configured to cause one or more processors to execute the method of claim 14.
